# FASCICULE DE BREVET EUROPEEN

(11) **EP 2 794 479 B1**
(45) Date de publication et mention de la délivrance du brevet: **08.04.2020**
(21) Numéro de dépôt: 12809807.6
(22) Date de dépôt: 19.12.2012
(51) Int. Cl.: C01B 33/193

(54) **PROCÉDÉ DE PRÉPARATION DE SILICES PRÉCIPITÉES**
HERSTELLUNGSVERFAHREN FÜR AUSGEFÄLLTE KIESELSÄURE
PRECIPITATED-SILICA PRODUCTION METHOD

(30) Priorité: 23.12.2011 FR 1104089; 25.01.2012 FR 1200217
(43) Date de publication de la demande: 29.10.2014
(73) Titulaire: Rhodia Opérations, 75009 Paris (FR)
(72) Inventeur: CLOUIN, Malika, F-75012 Paris (FR); NEVEU, Sylvaine, F-75005 Paris (FR)
(74) Mandataire: Ferri, Isabella
(86) Numéro de dépôt international: PCT/EP2012/076206
(87) Numéro de publication internationale: WO 2013/092745

(56) Documents cités:
- EP-A1- 0 520 862
- EP-A1- 0 754 650
- WO-A1-03/016215
- WO-A1-2010/022544
- FR-A- 1 506 330

## Description

La présente invention concerne un nouveau procédé de préparation de silice.

Il est connu d'employer des silices précipitées comme support de catalyseur, comme absorbant de matières actives (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), naturel(s) ou synthétiques(s), en particulier d'élastomère(s), notamment diéniques, par exemple pour les semelles de chaussures, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de freinage, les gaines, les câbles et les courroies de transmissions.

Il est ainsi connu de préparer, en mettant en œuvre une réaction de précipitation entre un silicate et à titre d'acide un acide dilué, des silices présentant une distribution granulométrique et/ou répartition poreuse particulières.

WO2010/022544A1 décrit un procédé de préparation de silices précipitées dans lequel l'acide utilisé dans la réaction de précipitation est choisi dans le groupe constitué de l'acide sulfurique à hauteur de 90 à 98,5 % en poids, de l'acide chlorhydrique à hauteur de 34 à 42,7 % en poids, de l'acide nitrique à hauteur de 60 à 68 % en poids, de l'acide phosphorique à hauteur de 80 à 100 % en poids, de l'acide carbonique ou du CO₂ et du bisulfite de sodium ou du SO₂.

Le but de l'invention est de proposer un nouveau procédé de préparation de silice, utilisable comme charge alternative pour les compositions de polymères. Ce procédé constitue une alternative aux procédés connus de préparation de silice.

Plus préférentiellement, l'un des buts de la présente invention consiste à fournir un procédé permettant de réduire la quantité d'énergie consommée et/ou la quantité d'eau employée lors de la préparation de silice, notamment par rapport aux procédés de préparation de l'état de la technique mettant en œuvre à titre d'acide un acide dilué.

L'invention propose un nouveau procédé de préparation de silice comprenant la réaction d'un silicate avec au moins un acide ce par quoi l'on obtient une suspension de silice, puis la séparation et le séchage de cette suspension, dans lequel la réaction du silicate avec l'agent acidifiant est réalisée selon les étapes successives suivantes :
(i) on forme un pied de cuve aqueux présentant un pH compris entre 2 et 5,
(ii) on ajoute audit pied de cuve, simultanément, du silicate et de l'acide, de telle manière que le pH du milieu réactionnel soit maintenu entre 2 et 5,
(iii) on arrête l'addition de l'acide tout en continuant l'addition de silicate dans le milieu réactionnel jusqu'à l'obtention d'une valeur du pH du milieu réactionnel comprise entre 7 et 10,
(iv) on ajoute au milieu réactionnel, simultanément, du silicate et de l'acide, de telle manière que le pH du milieu réactionnel soit maintenu entre 7 et 10,
(v) on arrête l'addition du silicate tout en continuant l'addition de l'acide dans le milieu réactionnel jusqu'à l'obtention d'une valeur du pH du milieu réactionnel inférieure à 6,
procédé dans lequel dans l'étape (ii) l'acide utilisé après l'atteinte du point de gel dans le milieu réactionnel est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

De manière avantageuse, l'acide concentré est de l'acide sulfurique concentré, c'est-à-dire de l'acide sulfurique présentant une concentration d'au moins 80% en masse, de préférence d'au moins 90 % en masse.

On peut ainsi utiliser, comme acide concentré, de l'acide sulfurique ayant une concentration d'au moins 1400 g/L, en particulier d'au moins 1650 g/L.

Selon l'une des caractéristiques essentielles de l'invention, prise en combinaison avec une succession d'étapes particulières, et en particulier la présence d'une première addition simultanée d'acide et de silicate en milieu acide à pH entre 2 et 5 et d'une seconde addition simultanée d'acide et de silicate en milieu basique à pH compris entre 7 et 10, l'acide utilisé dans une partie de l'étape (ii) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

De manière avantageuse, l'acide concentré est de l'acide sulfurique concentré, c'est-à-dire de l'acide sulfurique présentant une concentration d'au moins 80 % en masse (et en général d'au plus 98 % en masse), de préférence d'au moins 90 % en masse ; en particulier, sa concentration est comprise entre 90 et 98 % en masse, par exemple entre 91 et 97 % en masse.

Selon un mode de mise en œuvre du procédé, mais qui n'est pas le mode préféré de l'invention, l'acide concentré tel que défini ci-dessus est utilisé uniquement dans une partie de l'étape (ii).

L'acide utilisé dans les étapes (iv) et (v) peut alors être par exemple un acide dilué, de manière avantageuse de l'acide sulfurique dilué, c'est-à-dire présentant une concentration très inférieure à 80 % en masse, en l'occurrence une concentration inférieure à 20 % en masse (et en général d'au moins 4 %), en particulier inférieure à 14 % en masse, notamment d'au plus 10 % en masse, par exemple comprise entre 5 et 10 % en masse.

Selon une variante préférée de l'invention, l'acide utilisé dans l'étape (iv) est également un acide concentré tel que mentionné ci-dessus.

Cependant, selon une variante très préférée de l'invention, l'acide utilisé dans les étapes (iv) et (v) est un acide concentré tel que mentionné ci-dessus.

L'acide concentré utilisé dans une partie de l'étape (ii) est utilisé en général dans une deuxième et dernière partie de cette étape (ii) (l'acide utilisé dans l'autre partie de l'étape (ii) étant par exemple un acide dilué comme décrit ci-dessus). Ainsi, dans cette étape (ii), l'acide employé jusqu'à ce qu'on atteigne le point de gel dans le milieu réactionnel (correspondant à une brusque augmentation de la turbidité du milieu réactionnel caractéristique d'une augmentation de taille des objets) peut être un acide dilué tel que mentionné ci-dessus, de manière avantageuse de l'acide sulfurique dilué (c'est-à-dire présentant une concentration très inférieure à 80 % en masse, en l'occurrence une concentration inférieure à 20 % en masse, en général inférieure à 14 % en masse, en particulier d'au plus 10 % en masse, par exemple comprise entre 5 et 10 % en masse). L'acide employé après atteinte du point de gel dans le milieu réactionnel est quant à lui un acide concentré tel que mentionné ci-dessus, de manière avantageuse de l'acide sulfurique concentré, c'est-à-dire de l'acide sulfurique présentant une concentration d'au moins 80 % en masse, de préférence d'au moins 90 % en masse, en particulier comprise entre 90 et 98 % en masse.

De même, dans cette étape (ii), l'acide employé dans les x premières minutes de l'étape (ii), avec x compris entre 10 et 25, en particulier entre 15 et 25, par exemple égal à 20, peut être un acide dilué tel que mentionné ci-dessus et l'acide employé après les x premières minutes de l'étape (ii), avec x compris entre 10 et 25, en particulier entre 15 et 25, par exemple égal à 20, peut être une acide concentré tel que mentionné ci-dessus. x est par exemple compris entre 12 et 22. x peut être également supérieur ou égal à 10 et strictement inférieur à 15.

Dans le cadre de cette variante très préférée de l'invention, l'acide utilisé dans la totalité de l'étape (ii) peut également être un acide concentré tel que mentionné ci-dessus, de manière avantageuse de l'acide sulfurique concentré, c'est-à-dire présentant une concentration d'au moins 80 % en masse, de préférence d'au moins 90 % en masse, en particulier comprise entre 90 et 98 % en masse. Dans ce cas, on peut éventuellement ajouter de l'eau dans le pied de cuve initial, en particulier soit avant l'étape (ii) soit au cours de l'étape (ii).

Dans le procédé selon l'invention, on utilise généralement comme acide(s) (acide concentré ou acide dilué) un acide organique tel que l'acide acétique, l'acide formique ou l'acide carbonique, ou, de préférence, un acide minéral tel que l'acide sulfurique, l'acide nitrique, l'acide phosphorique ou l'acide chlorhydrique,
Si on utilise comme acide concentré de l'acide acétique concentré ou de l'acide formique concentré, alors leur concentration est d'au moins 90 % en masse.

Si on utilise comme acide concentré de l'acide nitrique concentré, alors sa concentration est d'au moins 60 % en masse.

Si on utilise comme acide concentré de l'acide phosphorique concentré, alors sa concentration est d'au moins 75 % en masse.

Si on utilise comme acide concentré de l'acide chlorhydrique concentré, alors sa concentration est d'au moins 30 % en masse.

Cependant, de manière très avantageuse, on emploie comme acide(s) un (des) acide(s) sulfurique(s), l'acide sulfurique concentré alors utilisé présentant une concentration telle que déjà mentionnée dans l'exposé ci-dessus.

En général, lorsque de l'acide concentré est utilisé dans plusieurs étapes, on emploie alors le même acide concentré.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en SiO₂) comprise entre 40 et 330 g/L, par exemple entre 60 et 300 g/L, en particulier entre 60 et 260 g/L.

De manière générale, on emploie comme silicate, le silicate de sodium.

Dans le cas où l'on utilise le silicate de sodium, celui-ci présente, en général, un rapport pondéral SiO₂/Na₂O compris entre 2,5 et 4, par exemple entre 3,2 et 3,8.

En ce qui concerne plus particulièrement le procédé de préparation de l'invention, la réaction du silicate avec l'acide se fait d'une manière très spécifique selon les étapes suivantes.

On forme tout d'abord un pied de cuve aqueux présentant un pH compris entre 2 et 5.

De préférence, le pied de cuve formé présente un pH compris entre 2,5 et 5, notamment entre 3 et 4,5 ; ce pH est par exemple compris entre 3,5 et 4,5.

Ce pied de cuve initial peut être obtenu par ajout d'acide à de l'eau de manière à obtenir une valeur de pH du pied de cuve entre 2 et 5, de préférence entre 2,5 et 5, notamment entre 3 et 4,5 et par exemple entre 3,5 et 4,5.

Il peut être également obtenu par ajout d'acide à un mélange eau + silicate de manière à obtenir cette valeur de pH.

Il peut aussi être préparé par ajout d'acide à un pied de cuve contenant des particules de silice préalablement formées à un pH inférieur à 7, de manière à obtenir une valeur de pH entre 2 et 5, de préférence entre 2,5 et 5, notamment entre 3 et 4,5 et par exemple entre 3,5 et 4,5.

Associé à l'utilisation d'acide concentré dans au moins une partie de l'étape (ii), le pied de cuve formé dans l'étape (i) peut comprendre un électrolyte. Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'acide, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

De préférence, lorsque l'on utilise du sulfate de sodium comme électrolyte dans l'étape (i), sa concentration dans le pied de cuve initial est comprise, en particulier, entre 12 et 20 g/L, par exemple entre 13 et 18 g/L.

La deuxième étape (étape (ii)) consiste en une addition simultanée d'acide et de silicate, de telle manière (en particulier à des débits tels) que le pH du milieu réactionnel soit maintenu entre 2 et 5, de préférence entre 2,5 et 5, notamment entre 3 et 4,5, par exemple entre 3,5 et 4,5.

En général, cette addition simultanée est réalisée de manière telle que la valeur du pH du milieu réactionnel soit constamment égale (à ± 0,2 près) à celle atteinte à l'issue de l'étape initiale (i).

Puis, dans une étape (iii), on arrête l'addition de l'acide tout en continuant l'addition de silicate dans le milieu réactionnel de manière à obtenir une valeur du pH du milieu réactionnel comprise entre 7 et 10, de préférence entre 7,5 et 9,5.

Il peut alors être avantageux d'effectuer juste après cette étape (iii) et donc juste après l'arrêt de l'addition de silicate, un mûrissement du milieu réactionnel, notamment au pH obtenu à l'issue de l'étape (iii), et en général sous agitation ; ce mûrissement peut par exemple durer de 2 à 45 minutes, en particulier de 5 à 25 minutes et ne comporte préférentiellement ni addition d'acide, ni addition de silicate.

Après l'étape (iii) et l'éventuel mûrissement, on procède à une nouvelle addition simultanée d'acide et de silicate, de telle manière (en particulier à des débits tels) que le pH du milieu réactionnel soit maintenu entre 7 et 10, de préférence entre 7,5 et 9,5.

En général, cette seconde addition simultanée (étape (iv)) est réalisée de manière telle que la valeur du pH du milieu réactionnel soit constamment égale (à ± 0,2 près) à celle atteinte à l'issue de l'étape précédente.

Il est à noter que l'on peut, entre l'étape (iii) et l'étape (iv), par exemple entre, d'une part, l'éventuel mûrissement suivant l'étape (iii), et, d'autre part, l'étape (iv), ajouter au milieu réactionnel de l'acide, de préférence de l'acide concentré tel que défini ci-dessus, le pH du milieu réactionnel à l'issue de cette addition d'acide étant cependant compris entre 7 et 9,5, de préférence entre 7,5 et 9,5.

Enfin, dans une étape (v), on arrête l'addition du silicate tout en continuant l'addition d'acide dans le milieu réactionnel de manière à obtenir une valeur du pH du milieu réactionnel inférieure à 6, de préférence comprise entre 3 et 5,5, en particulier entre 3 et 5, par exemple entre 3 et 4,5.

Il peut alors être avantageux d'effectuer après cette étape (v) et donc juste après l'arrêt de l'addition d'acide, un mûrissement du milieu réactionnel, notamment au pH obtenu à l'issue de l'étape (v), et en général sous agitation ; ce mûrissement peut par exemple durer de 2 à 45 minutes, en particulier de 5 à 20 minutes et ne comporte préférentiellement ni addition d'acide, ni addition de silicate.

L'enceinte réactionnelle dans laquelle est mis en œuvre l'ensemble de la réaction du silicate avec l'acide est habituellement muni d'un équipement d'agitation et d'un équipement de chauffage adéquats.

L'ensemble de la réaction du silicate avec l'acide est généralement réalisé entre 70 et 95 °C, en particulier entre 75 et 95 °C.

Selon une variante de l'invention, l'ensemble de la réaction du silicate avec l'acide est effectué à une température constante, habituellement comprise entre 70 et 95 °C, en particulier entre 75 et 95 °C.

Selon une autre variante de l'invention, que l'étape (ii) soit mise en œuvre en totalité ou en partie avec de l'acide concentré, la température de fin de réaction est plus élevée que la température de début de réaction : ainsi, on maintient la température au début de la réaction (par exemple au cours des étapes (i) à (iii)) de préférence entre 70 et 85 °C, puis on augmente la température, de préférence jusqu'à une valeur comprise entre 85 et 95 °C, valeur à laquelle elle est maintenue (par exemple au cours des étapes (iv) et (v)) jusqu'à la fin de la réaction.

Selon une autre variante de l'invention, par exemple (mais pas uniquement) lorsqu'une partie de l'étape (ii) n'est pas effectuée avec de l'acide concentré, l'ensemble des étapes (i) à (v) peut être effectué à une température constante.

On obtient, à l'issue des étapes qui viennent d'être décrites, une bouillie de silice qui est ensuite séparée (séparation liquide-solide).

La séparation mise en œuvre dans le procédé de préparation selon l'invention comprend habituellement une filtration, suivie d'un lavage si nécessaire. La filtration s'effectue selon toute méthode convenable, par exemple au moyen d'un filtre presse, d'un filtre à bande, d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à billes. Le délitage est généralement effectué en présence d'un composé de l'aluminium, en général un aluminate de métal alcalin, notamment de potassium ou de manière préférée de sodium et, éventuellement, en présence d'un acide tel que décrit précédemment (dans ce dernier cas, le composé de l'aluminium et l'acide sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en œuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par le procédé selon l'invention offrent ainsi l'avantage, entre autres, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en œuvre des poudres classiques.

Le procédé de préparation selon l'invention permet notamment d'obtenir des silices, plutôt du type silices précipitées, qui, d'une part, sont hautement structurées et non friables, et, d'autre part, présentent généralement une bonne aptitude à la dispersion (dispersibilité) dans les polymères et confèrent à ceux-ci un compromis de propriétés très satisfaisant, en particulier au niveau de leurs propriétés dynamiques et mécaniques (notamment bon effet de renforcement et très bonne résistance à l'abrasion), sans pénaliser leurs propriétés rhéologiques. Les silices obtenues présentent de préférence une distribution granulométrique et/ou une répartition poreuse particulières.

La mise en œuvre du procédé de préparation selon l'invention, particulièrement lorsque l'acide concentré utilisé est de l'acide sulfurique concentré, permet en particulier d'obtenir au cours dudit procédé (à l'issue de l'étape (v)) une suspension plus concentrée en silice que celle obtenue par un procédé identique utilisant uniquement de l'acide dilué, et donc un gain en productivité en silice (pouvant atteindre par exemple au moins 10 à 40 %), tout en s'accompagnant de manière surprenante de l'obtention de silices, plutôt du type silices précipitées, hautement structurées et avec une distribution granulométrique spécifique et/ou une répartition poreuse particulières.

De manière générale, les silices obtenues par le procédé selon l'invention présentent préférentiellement des caractéristiques physico-chimiques et des propriétés comparables à celles des silices obtenues par un procédé identique utilisant uniquement de l'acide dilué, notamment au niveau de leur aptitude à la dispersion (dispersibilité) dans les polymères. Elles confèrent alors à ceux-ci un compromis de propriétés très satisfaisant également comparable, en particulier au niveau de leurs propriétés dynamiques (notamment diminution de la dissipation d'énergie en déformation (faible effet Payne), faibles pertes hystérétiques à haute température (notamment diminution de la tangente delta à 60 °C), sans pénaliser leurs propriétés rhéologiques (et donc sans pénaliser leur aptitude à la mise en œuvre / mise en forme (par exemple, plus faible viscosité à cru à iso-surface spécifique)). Et elles possèdent alors des propriétés mécaniques également comparables, en particulier un bon effet de renforcement, notamment en terme de modules, et une très bonne résistance à l'abrasion, d'où une résistance améliorée à l'usure pour les articles finis à base desdits polymères.

De manière générale, le procédé selon l'invention permet d'obtenir des silices présentant les caractéristiques des silices décrites dans la demande internationale WO 03/016215.

De manière avantageuse, dans le même temps, notamment lorsque l'acide concentré utilisé est de l'acide sulfurique concentré, le procédé selon l'invention permet, par rapport à un procédé identique employant uniquement de l'acide dilué, un gain (pouvant atteindre par exemple au moins 20 à 60 %) sur la consommation d'énergie (sous forme de vapeur vive par exemple), en particulier à la réaction de précipitation (c'est-à-dire à l'issue de l'étape (v)), du fait d'une diminution des quantités d'eau engagées et de l'exo-thermicité liée à l'utilisation d'acide concentré. En outre, l'utilisation d'acide concentré permet de restreindre (par exemple d'au moins 15 %) la quantité d'eau nécessaire à la réaction, notamment du fait de la diminution de la quantité d'eau utilisée pour la préparation de l'acide.

Les silices préparées par le procédé selon l'invention peuvent être utilisées dans de nombreuses applications.

Elles peuvent être employées par exemple comme support de catalyseur, comme absorbant de matières actives (en particulier supports de liquides, notamment utilisés dans l'alimentation, tels que les vitamines (vitamine E), le chlorure de choline), dans des compositions des polymère(s), notamment d'élastomère(s), de silicone(s), comme agent viscosant, texturant ou anti-mottant, comme élément pour séparateurs de batteries, comme additif pour dentifrice, pour béton, pour papier.

Cependant elles trouvent une application particulièrement intéressante dans le renforcement des polymères, naturels ou synthétiques.

Les compositions de polymère(s) dans lesquelles elles peuvent être utilisées, notamment à titre de charge renforçante, sont en général à base d'un ou plusieurs polymères ou copolymères, en particulier d'un ou plusieurs élastomères, notamment les élastomères thermoplastiques, présentant, de préférence, au moins une température de transition vitreuse comprise entre -150 et +300 °C, par exemple entre -150 et +20 °C.

A titre de polymères possibles, on peut citer les polymères diéniques, en particulier les élastomères diéniques.

On peut citer, à titre d'exemples, non limitatifs, d'articles finis à base des compositions de polymère(s) décrites précédemment les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les bandes de convoyeur et les courroies de transmissions.

Les exemples suivants illustrent l'invention sans toutefois en limiter la portée.

### EXEMPLE 1 (comparatif)

Dans un réacteur en acier inoxydable muni d'un système d'agitation par hélice et d'un chauffage par double enveloppe, on introduit :
- 97 kg d'eau,
- 1,51 kg de Na₂SO₄ (électrolyte),

La solution est portée à 92 °C. L'ensemble de la réaction est réalisé à cette température. Sous agitation, de l'acide sulfurique dilué de densité à 20 °C égale à 1,050 (acide sulfurique de concentration massique égale à 7,7 %) est introduit jusqu'à ce que le pH atteigne une valeur de 3,7.

On introduit simultanément dans le réacteur pendant 25 minutes une solution de silicate de sodium de rapport pondéral SiO₂/Na₂O égal à 3,39 et de densité à 20 °C égale à 1,229 à un débit de 668 g/min et de l'acide sulfurique du type décrit ci-avant à un débit régulé de manière à amener puis maintenir le pH du milieu réactionnel à une valeur de 4,4.

Au terme des 25 minutes d'addition simultanée, l'introduction d'acide sulfurique du type décrit ci-avant est arrêtée et le débit de la solution de silicate est augmenté à 880 g/min jusqu'à atteindre une valeur du pH égale à 8 en 2 minutes environ.

Une nouvelle addition simultanée est réalisée pendant 18 minutes avec un débit de silicate de sodium de 1075 g/min (même silicate de sodium que pour la première addition simultanée) et un débit d'acide sulfurique du type décrit ci-avant, de concentration massique égale à 7,7%, régulé de manière à maintenir le pH du milieu réactionnel à une valeur de 8.

A l'issue de cette addition simultanée, le milieu réactionnel est amené à un pH de 4,6 par de l'acide sulfurique de concentration massique égale à 7,7% à un débit égal à 515 g/min et en 4 minutes environ.

La durée totale de la réaction est de 48 minutes.

On obtient ainsi une bouillie de silice précipitée qui est filtrée et lavée au moyen d'un filtre presse de telle sorte qu'on récupère finalement un gâteau de silice dont l'humidité est de 80 % (donc un taux de matière sèche de 20 % en poids). Ce gâteau est ensuite fluidifié par action mécanique et chimique (ajout d'une quantité d'aluminate de sodium correspondant à un rapport pondéral Al/SiO₂ de 0,30 %). Après cette opération de délitage, on obtient un gâteau pompable, de pH égal à 5,8, qui est alors atomisé au moyen d'un atomiseur à buses.

Les caractéristiques de la silice obtenue (sous forme de billes sensiblement sphériques) sont les suivantes :
Surface spécifique CTAB : 190 m²/g
Surface spécifique BET : 214 m²/g
V_{(d5 - d50)}/V_{(d5 - d100)} : 0,73
Largeur Ld (XDC) : 1,66
Largeur de distribution poreuse Ldp : 1,85

### EXEMPLE 2

Dans un réacteur en acier inoxydable muni d'un système d'agitation par hélice et d'un chauffage par double enveloppe, on introduit :
- 112 kg d'eau,
- 1,75 kg de Na₂SO₄ (électrolyte),

La solution est portée à 92 °C. L'ensemble de la réaction est réalisé à cette température. Sous agitation, de l'acide sulfurique dilué de densité à 20 °C égale à 1,050 (acide sulfurique de concentration massique égale à 7,6%) est introduit jusqu'à ce que le pH atteigne une valeur de 3,7.

On introduit simultanément dans le réacteur pendant 15 minutes une solution de silicate de sodium de rapport pondéral SiO₂/Na₂O égal à 3,41 et de densité à 20 °C égale à 1,226 à un débit de 774 g/min et de l'acide sulfurique du type décrit ci-avant à un débit régulé de manière à amener puis maintenir le pH du milieu réactionnel à une valeur de 4,2. Au terme de la 15^{ème} minute, l'addition de l'acide sulfurique du type décrit ci-avant est arrêtée et de l'acide sulfurique concentré de densité à 20 °C égale à 1,83 (acide sulfurique de concentration massique égale à 95 %) est ajouté simultanément à la solution de silicate de sodium et pendant 10 minutes à un débit régulé de manière à maintenir le pH du milieu réactionnel à 4,2.

Au terme des 25 minutes d'addition simultanée, l'introduction d'acide concentré est arrêtée et le débit de la solution de silicate est augmenté à 847 g/min jusqu'à atteindre une valeur du pH égale à 8 en 2 minutes environ.

Une nouvelle addition simultanée est réalisée pendant 18 minutes avec un débit de silicate de sodium de 1225 g/min (même silicate de sodium que pour la première addition simultanée) et un débit d'acide sulfurique concentré, de concentration massique égale à 95%, régulé de manière à maintenir le pH du milieu réactionnel à une valeur de 8.

A l'issue de cette addition simultanée, le milieu réactionnel est amené à un pH de 4,5 par de l'acide sulfurique de concentration massique égale à 95% à un débit égal à 93 g/min et en 2 minutes environ.

La durée totale de la réaction est de 48 minutes.

Par rapport à l'exemple 1, on constate :
- un gain en productivité à la réaction (concernant la concentration finale exprimée en SiO₂ du milieu réactionnel) de 22 %,
- un gain en consommation d'eau à la réaction de 18 %,
- un gain en consommation d'énergie (sous forme de vapeur vive) à la réaction de 24 %.

On obtient ainsi une bouillie de silice précipitée qui est filtrée et lavée au moyen d'un filtre presse de telle sorte qu'on récupère finalement un gâteau de silice dont l'humidité est de 79 % (donc un taux de matière sèche de 21 % en poids). Ce gâteau est ensuite fluidifié par action mécanique et chimique (ajout d'une quantité d'aluminate de sodium correspondant à un rapport pondéral Al/SiO₂ de 0,30 %). Après cette opération de délitage, on obtient un gâteau pompable, de pH égal à 6,0, qui est alors atomisé au moyen d'un atomiseur à buses.

Les caractéristiques de la silice obtenue (sous forme de billes sensiblement sphériques) sont les suivantes :
Surface spécifique CTAB : 190 m²/g
Surface spécifique BET : 214 m²/g
V_{(d5 - d50)}/V_{(d5 - d100)} : 0,74
Largeur Ld (XDC) : 1,68
Largeur de distribution poreuse Ldp : 2,03

## Revendications

1. Procédé de préparation de silice du type comprenant la réaction d'un silicate avec au moins un acide ce par quoi l'on obtient une suspension de silice, puis la séparation et le séchage de cette suspension, dans lequel la réaction du silicate avec l'acide est réalisée selon les étapes successives suivantes :
(i) on forme un pied de cuve aqueux présentant un pH compris entre 2 et 5, de préférence entre 2,5 et 5,
(ii) on ajoute audit pied de cuve, simultanément, du silicate et de l'acide, de telle manière que le pH du milieu réactionnel soit maintenu entre 2 et 5, de préférence entre 2,5 et 5,
(iii) on arrête l'addition de l'acide tout en continuant l'addition de silicate dans le milieu réactionnel jusqu'à l'obtention d'une valeur du pH du milieu réactionnel comprise entre 7 et 10, de préférence entre 7,5 et 9,5,
(iv) on ajoute au milieu réactionnel, simultanément, du silicate et de l'acide, de telle manière que le pH du milieu réactionnel soit maintenu entre 7 et 10, de préférence entre 7,5 et 9,5,
(v) on arrête l'addition du silicate tout en continuant l'addition de l'acide dans le milieu réactionnel jusqu'à l'obtention d'une valeur du pH du milieu réactionnel inférieure à 6,
procédé dans lequel dans l'étape (ii) l'acide utilisé après l'atteinte du point de gel dans le milieu réactionnel est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

2. Procédé selon la revendication 1, **caractérisé en ce que** l'acide utilisé dans au moins une des étapes (iv) et (v) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

3. Procédé selon la revendication 1 **caractérisé en ce que** l'acide utilisé dans les étapes (iv) et (v) est un acide concentré choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

4. Procédé selon l'une des revendications 1 à 3, **caractérisé en ce que** ledit acide concentré est de l'acide sulfurique présentant une concentration d'au moins 80 % en masse, en particulier d'au moins 90 % en masse.

5. Procédé selon l'une des revendications 1 à 4, **caractérisé en ce que** ledit acide concentré est de l'acide sulfurique présentant une concentration comprise entre 90 et 98 % en masse.

6. Procédé selon l'une des revendications 1 à 5, **caractérisé en ce que**, dans l'étape (v), on arrête l'addition du silicate tout en continuant l'addition de l'acide dans le milieu réactionnel jusqu'à l'obtention d'une valeur du pH du milieu réactionnel comprise entre 3 et 5,5, par exemple entre 3 et 5.

7. Procédé selon l'une des revendications 1 à 6, **caractérisé en ce que**, entre l'étape (iii) et l'étape (iv), on ajoute au milieu réactionnel de l'acide, en particulier de l'acide concentré, le pH du milieu réactionnel à l'issue de cette addition étant compris entre 7 et 9,5, de préférence entre 7,5 et 9,5.

8. Procédé selon l'une des revendications 1 à 7, **caractérisé en ce que** l'ensemble de la réaction du silicate avec l'acide est réalisé entre 70 et 95 °C, de préférence entre 75 et 95 °C.

9. Procédé selon l'une des revendications 1 à 8, **caractérisé en ce que** l'ensemble de la réaction du silicate avec l'acide est réalisé à une température constante.

10. Procédé selon l'une des revendications 1 à 9, **caractérisé en ce que** l'étape
(i) comprend l'ajout d'acide à de l'eau de manière à obtenir une valeur de pH du pied de cuve ainsi formé entre 2 et 5, de préférence entre 2,5 et 5, notamment entre 3,0 et 4,5.

11. Procédé selon l'une des revendications 1 à 9, **caractérisé en ce que** l'étape
(i) comprend l'ajout d'acide à un mélange eau + silicate de manière à obtenir une valeur de pH du pied de cuve ainsi formé entre 2 et 5, de préférence entre 2,5 et 5, notamment entre 3,0 et 4,5.

12. Procédé selon l'une des revendications 1 à 9, **caractérisé en ce que** l'étape
(i) comprend l'ajout d'acide à un pied de cuve contenant des particules de silice préformées à un pH supérieur à 7, de manière à obtenir une valeur de pH du pied de cuve ainsi formé entre 2 et 5, de préférence entre 2,5 et 5, notamment entre 3,0 et 4,5.

## Patentansprüche

1. Verfahren zur Herstellung von Kieselsäure des Typs, bei dem man ein Silikat mit mindestens einer Säure umsetzt, wodurch man eine Suspension von Kieselsäure erhält, und diese Suspension dann trennt und trocknet, wobei die Umsetzung des Silikats mit der Säure gemäß den folgenden aufeinanderfolgenden Schritten durchgeführt wird:
(i) man bildet eine wässrige Vorlage mit einem pH-Wert zwischen 2 und 5, vorzugsweise zwischen 2,5 und 5,
(ii) man gibt gleichzeitig Silikat und Säure derart zu der Vorlage, dass der pH-Wert des Reaktionsmediums zwischen 2 und 5, vorzugsweise zwischen 2,5 und 5, gehalten wird,
(iii) man hört mit der Zugabe der Säure auf und fährt gleichzeitig mit der Zugabe von Silikat zum Reaktionsmedium fort, bis man einen pH-Wert des Reaktionsmediums zwischen 7 und 10, vorzugsweise zwischen 7,5 und 9,5, erhält,
(iv) man gibt gleichzeitig Silikat und Säure derart zu dem Reaktionsmedium, dass der pH-Wert des Reaktionsmediums zwischen 7 und 10, vorzugsweise zwischen 7,5 und 9,5, gehalten wird,
(v) man hört mit der Zugabe des Silikats auf und fährt gleichzeitig mit der Zugabe der Säure zum Reaktionsmedium fort, bis man einen pH-Wert des Reaktionsmediums von weniger als 6 erhält,
wobei es sich in Schritt (ii) bei der nach dem Erreichen des Gelpunkts im Reaktionsmedium verwendeten Säure um eine konzentrierte Säure aus der Gruppe bestehend aus Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von 30 Massen-% handelt.

2. Verfahren nach Anspruch 1, **dadurch gekennzeichnet, dass** es sich bei der in mindestens einem der Schritte (iv) und (v) verwendeten Säure um eine konzentrierte Säure aus der Gruppe bestehend aus Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von 30 Massen-% handelt.

3. Verfahren nach Anspruch 1, **dadurch gekennzeichnet, dass** es sich bei der in den Schritten (iv) und (v) verwendeten Säure um eine konzentrierte Säure aus der Gruppe bestehend aus Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von 30 Massen-% handelt.

4. Verfahren nach einem der Ansprüche 1 bis 3, **dadurch gekennzeichnet, dass** es sich bei der konzentrierten Säure um Schwefelsäure mit einer Konzentration von mindestens 80 Massen-%, insbesondere mindestens 90 Massen-%, handelt.

5. Verfahren nach einem der Ansprüche 1 bis 4, **dadurch gekennzeichnet, dass** es sich bei der konzentrierten Säure um Schwefelsäure mit einer Konzentration zwischen 90 und 98 Massen-% handelt.

6. Verfahren nach einem der Ansprüche 1 bis 5, **dadurch gekennzeichnet, dass** man in Schritt (v) mit der Zugabe von Silikat aufhört und gleichzeitig mit der Zugabe der Säure zum Reaktionsmedium fortfährt, bis man einen pH-Wert des Reaktionsmediums zwischen 3 und 5,5, beispielsweise zwischen 3 und 5, erhält.

7. Verfahren nach einem der Ansprüche 1 bis 6, **dadurch gekennzeichnet, dass** man zwischen Schritt (iii) und Schritt (iv) Säure, insbesondere konzentrierte Säure, zugibt, wobei der pH-Wert des Reaktionsmediums am Ende dieser Zugabe zwischen 7 und 9,5, vorzugsweise zwischen 7,5 und 9,5, liegt.

8. Verfahren nach einem der Ansprüche 1 bis 7, **dadurch gekennzeichnet, dass** die gesamte Umsetzung des Silikats mit der Säure zwischen 70 und 95 °C, vorzugsweise zwischen 75 und 95 °C, durchgeführt wird.

9. Verfahren nach einem der Ansprüche 1 bis 8, **dadurch gekennzeichnet, dass** die gesamte Umsetzung des Silikats mit der Säure bei einer konstanten Temperatur durchgeführt wird.

10. Verfahren nach einem der Ansprüche 1 bis 9, **dadurch gekennzeichnet, dass** Schritt (i) die Zugabe von Säure zu Wasser zum Erhalt eines pH-Werts der so gebildeten Vorlage zwischen 2 und 5, vorzugsweise zwischen 2,5 und 5, insbesondere zwischen 3,0 und 4,5, umfasst.

11. Verfahren nach einem der Ansprüche 1 bis 9, **dadurch gekennzeichnet, dass** Schritt (i) die Zugabe von Säure zu einer Mischung von Wasser und Silikat zum Erhalt eines pH-Werts der so gebildeten Vorlage zwischen 2 und 5, vorzugsweise zwischen 2,5 und 5, insbesondere zwischen 3,0 und 4,5, umfasst.

12. Verfahren nach einem der Ansprüche 1 bis 9, **dadurch gekennzeichnet, dass** Schritt (i) die Zugabe von Säure zu der bei einem pH-Wert von mehr als 7 vorgebildete Kieselsäureteilchen enthaltenden Vorlage zum Erhalt eines pH-Werts der so gebildeten Vorlage zwischen 2 und 5, vorzugsweise zwischen 2,5 und 5, insbesondere zwischen 3,0 und 4,5, umfasst.

## Claims

1. Method for producing silica of the type comprising the reaction of a silicate with at least one acid, as a result of which a silica suspension is obtained, then the separation and drying of this suspension, in which the reaction of the silicate with the acid is carried out according to the following successive steps:
(i) an aqueous vessel heel having a pH of between 2 and 5, preferably between 2.5 and 5, is formed,
(ii) silicate and acid are simultaneously added to said vessel heel, in such a way that the pH of the reaction medium is maintained between 2 and 5, preferably between 2.5 and 5,
(iii) the addition of the acid is stopped while at the same time continuing the addition of silicate to the reaction medium until a pH value of the reaction medium of between 7 and 10, preferably between 7.5 and 9.5, is obtained,
(iv) silicate and acid are simultaneously added to the reaction medium, in such a way that the pH of the reaction medium is maintained between 7 and 10, preferably between 7.5 and 9.5,
(v) the addition of the silicate is stopped while at the same time continuing the addition of the acid to the reaction medium until a pH value of the reaction medium of less than 6 is obtained,
in which method, in step (ii), the acid used after the gel point has been reached in the reaction medium is a concentrated acid chosen from the group formed by sulfuric acid having a concentration of at least 80% by weight, in particular of at least 90% by weight, acetic acid or formic acid having a concentration of at least 90% by weight, nitric acid having a concentration of at least 60% by weight, phosphoric acid having a concentration of at least 75% by weight, and hydrochloric acid having a concentration of at least 30% by weight.

2. Method according to Claim 1, **characterized in that** the acid used in at least one of steps (iv) and (v) is a concentrated acid chosen from the group formed by sulfuric acid having a concentration of at least 80% by weight, in particular at least 90% by weight, acetic acid or formic acid having a concentration of at least 90% by weight, nitric acid having a concentration of at least 60% by weight, phosphoric acid having a concentration of at least 75% by weight, and hydrochloric acid having a concentration of at least 30% by weight.

3. Method according to Claim 1, **characterized in that** the acid used in steps (iv) and (v) is a concentrated acid chosen from the group formed by sulfuric acid having a concentration of at least 80% by weight, in particular at least 90% by weight, acetic acid or formic acid having a concentration of at least 90% by weight, nitric acid having a concentration of at least 60% by weight, phosphoric acid having a concentration of at least 75% by weight, and hydrochloric acid having a concentration of at least 30% by weight.

4. Method according to one of Claims 1 to 3, **characterized in that** said concentrated acid is sulfuric acid having a concentration of at least 80% by weight, in particular of at least 90% by weight.

5. Method according to one of Claims 1 to 4, **characterized in that** said concentrated acid is sulfuric acid having a concentration between 90 and 98% by weight.

6. Method according to one of Claims 1 to 5, **characterized in that**, in step (v), the addition of the silicate is stopped while at the same time continuing the addition of the acid to the reaction medium until a pH value of the reaction medium of between 3 and 5.5, for example between 3 and 5, is obtained.

7. Method according to one of Claims 1 to 6, **characterized in that**, between step (iii) and step (iv), acid, in particular concentrated acid, is added to the reaction medium, the pH of the reaction medium at the end of this addition being between 7 and 9.5, preferably between 7.5 and 9.5.

8. Method according to one of Claims 1 to 7, **characterized in that** the whole of the reaction of the silicate with the acid is carried out between 70 and 95°C, preferably between 75 and 95°C.

9. Method according to one of Claims 1 to 8, **characterized in that** the whole of the reaction of the silicate with the acid is carried out at a constant temperature.

10. Method according to one of Claims 1 to 9, **characterized in that** step (i) comprises the addition of acid to water in such a way as to obtain a pH value of the vessel heel thus formed of between 2 and 5, preferably between 2.5 and 5, in particular between 3.0 and 4.5.

11. Method according to one of Claims 1 to 9, **characterized in that** step (i) comprises the addition of acid to a water + silicate mixture in such a way as to obtain a pH value of the vessel heel thus formed of between 2 and 5, preferably between 2.5 and 5, in particular between 3.0 and 4.5.

12. Method according to one of Claims 1 to 9, **characterized in that** step (i) comprises the addition of acid to a vessel heel containing silica particles that were preformed at a pH above 7, in such a way as to obtain a pH value of the vessel heel thus formed between 2 and 5, preferably between 2.5 and 5, in particular between 3.0 and 4.5.
